# FASCICULE DE BREVET EUROPEEN

(11) **EP 2 240 500 B1**
(45) Date de publication et mention de la délivrance du brevet: **01.10.2014**
(21) Numéro de dépôt: 09700083.0
(22) Date de dépôt: 05.01.2009
(51) Int. Cl.: C07F 9/38

(54) **PROCEDE DE SYNTHESE DE DERIVES D'ACIDE HYDROXY-BISPHOSPHONIQUE**
VERFAHREN ZUR SYNTHETISIERUNG VON HYDROXY-BISPHOSPHONSÄUREDERIVATEN
METHOD FOR SYNTHESIZING HYDROXY-BISPHOSPHONIC ACID DERIVATIVES

(30) Priorité: 03.01.2008 FR 0850018
(43) Date de publication de la demande: 20.10.2010
(73) Titulaire: Université de Nantes, 44000 Nantes (FR); CHU Nantes, 44000 Nantes (FR); INSTITUT NATIONAL DE LA SANTE ET DE LA RECHERCHE MEDICALE (INSERM), 75013 Paris (FR); Centre National de la Recherche Scientifique (CNRS), 75016 Paris (FR)
(72) Inventeur: EGOROV, Maxim, F-44100 Nantes (FR); FORTUN, Yannick, F-44470 Mauves Sur Loire (FR); HEYMANN, Dominique, F-44610 Indre (FR); LEBRETON, Jacques, F-44300 Nantes (FR); MATHE, Monique, F-44300 Nantes (FR); PADRINES, Marc, F-44470 Carquefou (FR); REDINI, Françoise, F-44880 Sautron (FR)
(74) Mandataire: Regimbeau
(86) Numéro de dépôt international: PCT/EP2009/050026
(87) Numéro de publication internationale: WO 2009/083613

(56) Documents cités:
- KIECZYKOWSKI G R: "Preparation of (4-amino-1-hydroxybutylidene)bisphosphonic acid sodium salt, MK217 (ALENDRONATE SODIUM). AN IMPROVED PROCEDURE FOR THE PREPARATION OF 1-HYDROXY-1,1,-BISPHOSPHONIC ACIDS" JOURNAL OF ORGANIC CHEMISTRY, AMERICAN CHEMICAL SOCIETY, WASHINGTON, DC; US, vol. 60, no. 25, 1 janvier 1995 (1995-01-01), pages 8310-8312, XP002162672 ISSN: 0022-3263 cité dans la demande
- WIDLER L ET AL: "HIGHLY POTENT GEMINAL BIPHOSPHONATES. FROM PAMIDRONATE DISODIUM (AREDIA) TO ZOLEDRONIC ACID (ZOMETA)" JOURNAL OF MEDICINAL CHEMISTRY, US AMERICAN CHEMICAL SOCIETY. WASHINGTON, vol. 45, no. 17, 15 août 2002 (2002-08-15), pages 3721-3738, XP001164243 ISSN: 0022-2623 cité dans la demande
- LECOUVEY M ET AL: "A mild and efficient one-pot synthesis of 1-hydroxymethylene-1,1-bisp hosphonic acids. Preparation of new tripod ligands" TETRAHEDRON LETTERS, ELSEVIER, AMSTERDAM, vol. 42, no. 48, 26 novembre 2001 (2001-11-26), pages 8475-8478, XP004319796 ISSN: 0040-4039 cité dans la demande
- ERWANN GUENIN ET AL: 'Synthesis of 1-Hydroxymethylene-1,1-bis(phosphonic acids) from Acid Anhydrides: Preparation of a New Cyclic 1-Acyloxymethylene-1,1-bis(phosphonic acid)' EUROPEAN JOURNAL OF ORGANIC CHEMISTRY vol. 2004, no. 14, 01 Juillet 2004, pages 2983 - 2987, XP055043712 DOI: 10.1002/ejoc.200400053 ISSN: 1434-193X
- VAN LEEUWEN S H ET AL: "The synthesis of amides and dipeptides from unprotected amino acids by a simultaneous protection-activation strategy using boron trifluoride diethyl etherate", TETRAHEDRON LETTERS, ELSEVIER, AMSTERDAM, NL, vol. 46, no. 4, 24 January 2005 (2005-01-24), pages 653-656, XP027862481, ISSN: 0040-4039 [retrieved on 2005-01-24]
- ZHONGPING HUANG ET AL: 'An Efficient Synthesis of Amides and Esters via Triacyloxyboranes' SYNLETT vol. 2007, no. 7, 01 Avril 2007, pages 1026 - 1030, XP055043750 DOI: 10.1055/s-2007-973890 ISSN: 0936-5214

## Description

La présente invention concerne un procédé de synthèse de dérivés d'acide hydroxy-bisphosphonique à partir de l'acide carboxylique correspondant.

Les bisphosphonates (forme basique de dérivés d'acide bisphosphonique dont font partie les dérivés d'acide hydroxy-bisphosphonique) sont des analogues synthétiques des pyrophosphates endogènes pour lesquels la chaîne P-O-P a été remplacée par une chaîne P-C-P, conduisant à des composés métaboliquement stables qui représentent un outil thérapeutique efficace des ostéolyses (Heymann et al., Trends Mol. Med., 2004, 10, 337).

Ces molécules ont tout d'abord été utilisées pour leur capacité à cibler le tissu osseux. De la même manière que les pyrophosphates, les bisphosphonates ont une forte affinité pour la partie minérale de l'os (affinité entre les groupements phosphates et le calcium de la partie minérale de l'os) et peuvent moduler à forte dose la calcification. L'intérêt de telles substances a été mis en évidence pour le traitement de divers disfonctionnements du métabolisme osseux. Les bisphosphonates sont utilisés en particulier pour traiter les pathologies impliquant une résorption osseuse excessive conduisant d'une part à une hypercalcémie et d'autre part à des atteintes osseuses à l'origine de douleurs et de fractures.
Ainsi, leur utilisation s'est imposée depuis une dizaine d'années pour le traitement de l'ostéoporose, de l'hypercalcémie d'origine tumorale ou non, ainsi que pour des pathologies ostéolytiques tumorales telles que le myélome multiple ou les métastases osseuses secondaires d'un carcinome prostatique ou mammaire.
Les études de structure-activité, développées à ce jour, ont clairement montré que la capacité des bisphosphonates à inhiber la résorption osseuse dépendait de deux facteurs structuraux :
- les groupes phosphonates (et hydroxyle dans le cas d'hydroxy-bisphosphonates), essentiels pour une bonne affinité du composé avec la partie minérale de l'os,
- la chaîne latérale R, spécifique d'une cible moléculaire, qui détermine l'activité biologique associée à la molécule.

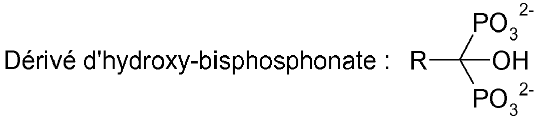

De nombreux procédés de préparation de dérivés d'acide hydroxy-bisphosphonique sont déjà connus.
Ces derniers sont communément obtenus en faisant réagir les acides carboxyliques correspondants avec du trichlorure de phosphore (PCl₃) et de l'acide phosphoreux (H₃PO₃) à des températures souvent supérieures à 100°C, soit en l'absence de solvant, soit en présence de solvant comme le chlorobenzène (Blum, H., Worms, K. US 4,054,598 ; Bosies, E et coll., DE 3,623,397 ; Widler, L.M. et coll., J. Med. Chem., 2002, 45, 3721) ou l'acide méthane sulfonique (G.R. Kieczykowski et coll., J. Org. Chem., 1995, 60, 8310). Outre ces conditions drastiques de synthèse, la présence de groupement OH sur la chaîne latérale R est prohibée car ce dernier réagit avec PCl₃ pour donné un dérivé phosphoré de type chlorophosphite, voire ester phosphoreux (Blum, M-M. et coll Journal of the American Chemical Society 2006, 128(39), 12750-12757 ; Hermans, R. J. M. et coll Journal of Organic Chemistry 1988, 53(9), 2077-84).

Une autre voie d'accès aux dérivés d'acide hydroxy-bisphosphonique consiste à hydrolyser les dérivés esters correspondants (hydroxy-bisphosphonates d'alkyle) toujours en milieu acide dur, sur une durée variable selon la nature du dérivé ester (Mallard, I et coll., Phosphorus Sulfur Silicon, 2000, 62, 15-23). Ces précurseurs hydroxy-bisphosphonates d'alkyle sont préparés à partir du chlorure d'acyle ou de l'anhydride d'acide correspondant par action du trialkyl phosphite (P(OR)₃) puis du dialkyl phosphite (HPO(OR)₂) en présence d'une base (R. Ruel et coll., J. Org. Chem., 1995, 60, 5209 ; Nguyen, L.N. et coll., J. Med. Chem., 1987, 30, 1426). Cette approche reste cependant délicate à mettre en oeuvre car selon la base et la température, un produit secondaire de type phosphinyl phosphate se forme en quantité parfois non négligeable.
Des méthodes plus récentes d'accès à ces dérivés d'acide hydroxy-bisphosphonique mettent en jeu un acide activé généralement sous sa forme de chlorure d'acyle ou d'anhydride d'acide et un trialkyl phosphite P(OR)₃ qui conduit, par réaction d'Arbuzov, aux dérivés souhaités. L'utilisation de la tris-trimethylsilylphosphite (P(OSiMe₃)₃) permet un accès direct au motif hydroxy-bisphosphonique par simple traitement avec du méthanol (M. Lecouvrey et coll., Tetrahedron Lett., 2001, 8475 ; M. Lecouvrey et coll., Synlett, 2005, 3, 425 ; E. Guenin et coll., European Journal of Organic Chemistry, 2004, 14, 2983). Dans ce dernier procédé de préparation, les produits secondaires solubles ou volatils après traitement seront facilement séparés du composé hydroxy-bisphosphonique insoluble (huileux ou solide). Cependant, l'activation de la fonction acide carboxylique en chlorure d'acyle ne permet pas de mettre en oeuvre ce procédé avec tout type de substrat, notamment des substrats comportant des fonctions hydroxyles ou amines primaires ou secondaires (Lecouvey, M. et coll., Eur. J. Org. Chem., 2007, 3380-91). En effet, les hydroxyles réagissent avec les agents de chloration tels que SOCl₂ pour donner le dérivé chloré.

Ainsi, ces différents procédés de préparation présentent un certain nombre de désavantages.
Tout d'abord, l'activation de l'acide carboxylique est réalisée dans des conditions moyennement acides, voire très acides et à des températures parfois supérieures à 100°C. Cette activation peut être réalisée dans des conditions plus douces par le chlorure de thionyle ou d'oxalyle mais certaines fonctionnalités restent encore parfois trop fragiles dans ces conditions.

De plus, l'utilisation d'acide phosphoreux ou de trichlorure de phosphore conduit fréquemment à l'obtention de mélanges de divers produits, souvent isolés sous la forme d'huiles, ce qui rend la purification du dérivé d'acide hydroxy-bisphosphonique difficile.

Enfin, les conditions réactionnelles des procédés de l'art antérieur ne permettent pas de mettre en oeuvre ces procédés avec tout type de substrats, en particuliers avec des substrats comportant des fonctions sensibles et réactives comme les hydroxyles ou les amines. Dans ces derniers cas, il sera nécessaire de protéger la fonction sensible ce qui implique deux étapes supplémentaires de protection et déprotection de ces fonctionnalités.

La présente invention concerne donc un nouveau procédé de préparation d'un dérivé d'acide hydroxy-bisphosphonique ou d'un sel de celui-ci à partir de l'acide carboxylique correspondant comprenant les étapes successives suivantes :
- activation de la fonction acide carboxylique sous la forme de son dérivé boronate par action d'un borane, puis
- réaction dans les conditions d'Arbuzov avec le tris(triméthylsilyl) phosphite,
- traitement avec un alcool, et
- séparation du dérivé d'acide hydroxy-bisphosphonique formé, du milieu réactionnel,
dans lequel :
le borane est choisi parmi le pinacolborane et le catécholborane ;
l'alcool est choisi parmi les alcools aliphatiques en C₁ à C₄ ; et
le dérivé d'acide hydroxy-bisphosphonique répond à la formule (I) suivante : 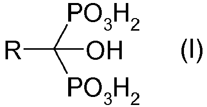 dans laquelle R désigne un groupement C₁₋₁₀alkyle, C₂₋₁₀alkényle, C₃₋₁₅cycloalkyle, aryle, C₃₋₁₅cycloalkyl-C₁₋₁₀alkyle, C₃₋₁₅cycloalkyl-C₂₋₁₀alkényle, C₃₋₁₅cycloalkyl-aryle, aryl-C₁₋₁₀alkyle, aryl-C₂₋₁₀alkényle, aryl-C₃₋₁₅cycloalkyle ou polycyclique hydrocarboné saturé ou insaturé en C₅₋₂₀,
ledit groupement étant éventuellement substitué par un groupement C₁₋₁₀alkyl-X-, C₂₋₁₀alkényl-X-, C₃₋₁₅cycloalkyl-X-, aryl-X-, C₃₋₁₅cycloalkyl-C₁₋₁₀alkyl-X-, C₁₋₁₅cycloalkyl-C₂₋₁₀alkényl-X-, C₃₋₁₅cycloalkyl-aryl-X-, aryl-C₁₋₁₀alkyl-X-, aryl-C₂₋₁₀alkényl-X-, aryl-C₃₋₁₅cycloalkyl-X-, (polycycle hydrocarboné saturé ou insaturé en C₅₋₂₀)-X-, aryl-X'-C₁₋₁₀alkyl-X-, aryl-X'-C₂₋₁₀alkényl-X-, aryl-X'-C₃₋₁₅cycloalkyl-X-, aryl-C₁₋₁₀alkyl-X'-C₁₋₁₀alkyl-X-, aryl-C₁₋₁₀alkyl-X'-C₂₋₁₀alkényl-X- ou aryl-C₁₋₁₀alkyl-X'-C₃₋₁₅cycloalkyl-X-, l'ensemble étant éventuellement substitué par un ou plusieurs groupement(s) choisi(s) parmi OR', NR'R", SR', C₁₋₁₀alkyle et un atome d'halogène ;
avec :
- X et X' désignant, indépendamment l'un de l'autre, un groupement, -O-, -NR'-, -S-, -CO-, -OC(O)-, -CO₂-, -SO₂-, -SO-, -SO₂-NR'-, -NR'-SO₂-, -NR'C(O)-, -C(O)NR'-, -OC(O)NR'- ou -NRC(O)O-, et
- R' et R" désignant, indépendamment l'un de l'autre, un atome d'hydrogène ou un groupement C₁₋₁₀alkyle, C2-₁₀alkényle, C₃₋₁₅cycloalkyle ou aryle.

Dans ce nouveau procédé, l'activation de la fonction acide carboxylique sous la forme de son dérivé boronate est réalisée dans des conditions douces, avec libération d'hydrogène, composé neutre. Le boronate obtenu peut alors réagir avec le tris(triméthylsilyl) phosphite dans les conditions d'Arbuzov, pour donner le dérivé d'acide hydroxy-bisphosphonique attendu après traitement avec un alcool et séparation du milieu réactionnel. Ce procédé réalisé à pH neutre et à température ambiante est donc compatible avec un large éventail d'acides carboxyliques de départ comme notamment des composés comportant des fonctions sensibles au milieu acide ou encore des fonctions amines ou alcools libres, ce qui n'était pas le cas avec les procédés de l'art antérieur. En effet, dans les procédés décrit dans l'art antérieur, il est nécessaire de protéger les fonctions amines et alcools libres préalablement alors que dans le cadre de la présente invention, un excès de borane approprié (1 équivalent supplémentaire pour chaque fonctionnalité OH ou amine) permet de protéger ces fonctionnalités par simple complexation avec le borane.

De plus, la purification du dérivé d'acide hydroxy-bisphosphonique se trouve simplifiée. En effet, les produits secondaires libérés lors de la réaction d'Arbuzov (boronates et phosphates) sont solubles dans le méthanol et les solvants utilisés généralement pour cette réaction, comme notamment le tétrahydrofurane, l'acétonitrile ou le nitrométhane, alors que le dérivé d'acide hydroxy-bisphosphonique est insoluble dans ces solvants. Ce dernier peut alors être facilement isolé par simple filtration, lorsqu'il se trouve sous forme solide. Cela permet alors d'avoir accès à des composés de haute pureté, avec de bons rendements.

L'utilisation de dérivés de bore est également intéressante du fait de leur faible toxicité, les borates ne semblant pas doués notamment d'activité mutagène ou cancérigène (R. Lauwerys et coll., Toxicologie industrielle et intoxications professionnelles, 5ème édition, ed. Masson, p 198).

De plus, il est possible d'envisager des synthèses asymétriques (comme celles décrites dans l'article de Yamamoto, H et al., J. Am. Chem. Soc., 1988, 110, 6254-6255) en utilisant un borane chiral ce qui n'est pas possible avec les procédés de l'art antérieur.

Enfin, ce procédé présente l'avantage supplémentaire de pouvoir être réalisé dans un même réacteur (procédé « one-pot »), c'est-à-dire sans devoir isoler les intermédiaires de synthèse, à savoir le dérivé boronate de l'acide carboxylique et le dérivé d'acide hydroxy-bisphosphonique silylé obtenu avant traitement avec un alcool.

Par « alcool aliphatique », on entend un composé comportant une fonction alcool OH sur une chaîne hydrocarbonée linéaire ou ramifiée et saturée ou insaturée, et comportant de préférence de 1 à 6 atomes de carbone, et encore de préférence, de 1 à 4 atomes de carbone.

De manière préférentielle, un sel de dérivé d'acide hydroxy-bisphosphonique de l'invention peut être notamment un sel obtenu à partir d'une base, organique ou inorganique.

On peut citer, à titre non limitatif, des bases inorganiques formant, par exemple, des sels d'ammonium ou des sels de métaux alcalins ou alcalino-terreux tels que le lithium, le sodium, le potassium, le magnésium ou encore le calcium, ou des bases organiques telles que la triéthylamine, la diisopropylamine, la pipéridine, la pyridine ou encore la morpholine.

Le procédé de l'invention permet la synthèse du dérivé d'acide hydroxy-bisphosphonique répondant à la formule (I) suivante : 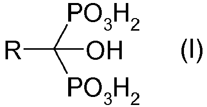 dans laquelle R désigne un groupement C₁₋₁₀alkyle, C₂₋₁₀alkényle, C₃₋₁₅cycloalkyle, aryle, C₃₋₁₅cycloalkyl-C₁₋₁₀alkyle, C₃₋₁₅cycloalkyl-C₂₋₁₀alkényle, C₃₋₁₅cycloalkyl-aryle, aryl-C₁₋₁₀alkyle, aryl-C₂₋₁₀alkényle, aryl-C₃₋₁₅cycloalkyle ou polycyclique hydrocarboné saturé ou insaturé en C₅₋₂₀,
ledit groupement étant éventuellement substitué par un groupement C₁₋₁₀alkyl-X-, C₂₋₁₀alkényl-X-, C₃₋₁₅cycloalkyl-X-, aryl-X-, C₃-₁₅cycloalkyl-C₁₋₁₀alkyl-X-, C₃-₁₅cycloalkyl-C₂₋₁₀alkényl-X-, C₃₋₁₅cycloalkyl-aryl-X-, aryl-C₁-₁₀alkyl-X-, aryl-C₂-₁₀alkényl-X-, aryl-C₃-₁₅cycloalkyl-X-, (polycycle hydrocarboné saturé ou insaturé en C₅₋₂₀) -X-, aryl-X'-C₁-₁₀alkyl-X-, aryl-X' -C₂₋₁₀alkényl-X-, aryl-X' -C₃₋₁₅cycloalkyl-X-, aryl-C₁₋₁₀alkyl-X' -C₁₋₁₀alkyl-X-, aryl-C₁₋₁₀alkyl-X' -C₂-₁₀alkényl-X- ou aryl-C₁₋₁₀alkyl-X'-C₃₋₁₅cycloalkyl-X-,
l'ensemble étant éventuellement substitué par un ou plusieurs groupement (s) choisi (s) parmi OR' (tel que OH ou OMe), NR' R" (tel que NH₂, NHMe ou NMe₂), SR' , C₁₋₁₀alkyle (tel que Me) et un atome d'halogène (tel que Cl), et en particulier choisi (s) parmi OR' , NR' R" , C₁₋₁₀alkyle et un atome d'halogène ;
avec :
- X et X' désignant, indépendamment l'un de l'autre, un groupement, -O-, -NR'-, -S-, -CO-, -OC(O)- -CO₂-, - SO₂-, -SO-, -SO₂-NR'-, -NR' -SO₂-, -NR'C(O)-, -C(O)NR'-, -OC(O)NR'- ou -NR'C(O)O-, et
- R' et R'' désignant, indépendamment l'un de l'autre, un atome d'hydrogène ou un groupement C₁₋₁₀alkyle, C₂-₁₀alkényle, C₃₋₁₅cycloalkyle ou aryle.

Par groupement « C₁₋₁₀alkyle », on entend, au sens de la présente invention, une chaîne hydrocarbonée saturée, linéaire ou ramifiée, comportant de 1 à 10 atomes de carbone, comme par exemple un groupement, méthyle, éthyle, isopropyle, tertio-butyle, pentyle, etc.

Par groupement « C₂₋₁₀alkényle », on entend, au sens de la présente invention, une chaîne hydrocarbonée, linéaire ou ramifiée, comportant au moins une insaturation (double liaison C=C) et comportant de 2 à 10 atomes de carbone, comme par exemple un groupement éthényle, propényle, 2,4-hexadiényle, etc.

Par groupement « C₃₋₁₅cycloalkyle », on entend, au sens de la présente invention, un groupement hydrocarboné saturé comportant au moins un cycle, de préférence un seul cycle, et comportant de 3 à 15, de préférence de 3 à 8, atomes de carbone, comme par exemple un groupement cyclopropyle, cyclohexyle, adamantyle, etc.

Par groupement « polycycle ou polycyclique hydrocarboné saturé ou insaturé en C₅₋₂₀ », on entend, au sens de la présente invention, un groupement hydrocarboné, saturé ou insaturé, comportant au moins 2, de préférence 2 à 5, cycles accolés, spiro-fusionnés ou pontés deux à deux. Un cycle pourra notamment être insaturé ou aromatique tandis que d'autres pourront être saturés. A titre d'exemple, il peut s'agir d'un groupe adamantyle ou du groupe tétracyclique suivant :

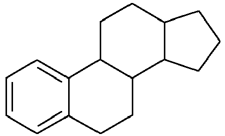

Par groupement « aryle », on entend, au sens de la présente invention, un groupement aromatique ou hétéroaromatique, comprenant un ou plusieurs cycles, comportant de préférence de 5 à 10 atomes cycliques, ces atomes cycliques comprenant éventuellement un ou plusieurs hétéroatome(s), en particulier un oxygène, un azote ou un soufre,, le reste étant des atomes de carbone, comme par exemple un groupement phényle, furanyle, thiényle, pyrrolyle, pyrazolyle, triazolyle, indolyle, pyridinyle, pyridazinyle, pyrimidinyle, pyrazinyle, naphtyle, etc.

Par « C₃₋₁₅cycloalkyl-C₁₋₁₀alkyle », on entend, au sens de la présente invention un groupement C₃₋₁₅cycloalkyle, tel que défini ci-dessus, lié à la molécule par l'intermédiaire d'un groupement C₁₋₁₀alkyle, tel que défini ci-dessus.

Par « C₃₋₁₅cycloalkyl-C₂₋₁₀alkényle », on entend, au sens de la présente invention un groupement C₃-₁₅cycloalkyle, tel que défini ci-dessus, lié à la molécule par l'intermédiaire d'un groupement C₂₋₁₀alkényle, tel que défini ci-dessus.

Par « C₃₋₁₅cycloalkyl-aryle », on entend, au sens de la présente invention un groupement C₃₋₁₅cycloalkyle, tel que défini ci-dessus, lié à la molécule par l'intermédiaire d'un groupement aryle, tel que défini ci-dessus.

Par « aryle-C₁₋₁₀alkyle », on entend, au sens de la présente invention un groupement aryle, tel que défini ci-dessus, lié à la molécule par l'intermédiaire d'un groupement C₁₋₁₀alkyle, tel que défini ci-dessus. Il s'agit en particulier d'un groupement benzyle.

Par « aryle-C₂₋₁₀alkényle », on entend, au sens de la présente invention un groupement aryle, tel que défini ci-dessus, lié à la molécule par l'intermédiaire d'un groupement C₂₋₁₀alkényle, tel que défini ci-dessus.

Par « aryl-C₃₋₁₅cycloalkyle », on entend, au sens de la présente invention un groupement aryle, tel que défini ci-dessus, lié à la molécule par l'intermédiaire d'un groupement C₃₋₁₅cycloalkyle, tel que défini ci-dessus.
Le terme « halogène » désigne un fluor, un brome, un chlore ou un iode.

En particulier, R désigne un groupement C₁₋₁₀alkyle, C₂₋₁₀alkényle, C₃₋₁₅cycloalkyle, aryle, aryl-C₁₋₁₀alkyle, aryl-C₂₋₁₀alkényle ou aryl-C₃₋₁₅cycloalkyle, éventuellement substitué par un groupement C₁₋₁₀alkyl-X-, C₂₋₁₀alkényl-X-, C₃₋₁₅cycloalkyl-X-, aryl-X-, aryl-C₁₋₁₀alkyl-X-, aryl-C₂₋₁₀alkényl-X-, aryl-C₃₋₁₅cycloalkyl-X-, aryl-X' -C₁₋₁₀alkyl-X-, aryl-X' -C₂₋₁₀alkényl-X-, aryl-X' -C₃₋₁₅cycloalkyl-X-, C₁-₁₀alkyl-aryl-X' -C₁₋₁₀alkyl-X-, C₁₋₁₀alkyl-aryl-X' -C₂₋₁₀alkényl-X- ou C₁₋₁₀alkyl-aryl-X' -C₃₋₁₅cycloalkyl-X-, l'ensemble étant éventuellement substitué par un ou plusieurs groupement(s) OR', NR'₂, SR' ou un halogène.
X et X' sont notamment choisis, indépendamment l'un de l'autre, parmi un groupement, -O-, -NR'-, -S-, -OC(O)-, - CO₂-, -SO₂-, -SO-, -NHC(O)-, -C(O)NH-, -OC(O)NH- et-NHC(O)O-.

De préférence, R' et R'' représentent, indépendamment l'un de l'autre, un atome d'hydrogène ou un groupe C1-10alkyle tel que méthyle. En particulier, R'=R''.

De manière avantageuse, le procédé de l'invention peut être réalisé à partir d'un acide carboxylique comportant des fonctions sensibles au milieu acide, comme par exemple un groupement tertio-butyloxycarbonyle (groupement Boc), silyloxy (OSiRₐR_{b}R_{c} avec Rₐ, R_{b} et R_{c} représentant indépendamment les uns des autres un groupe C₁₋₁₀alkyle), carboxylate ou phosphate de benzyle, et/ou des fonctions amines (primaires, secondaires ou tertiaires) et/ou alcools libres (OH).

Un borane présentant un caractère peu réducteur est utilisé afin qu'il ne réduise pas d'autres fonctionnalités éventuellement présentes sur la molécule telles que des fonctions alcènes ou cétones, à savoir le pinacolborane ou le catécholborane, et de préférence, on choisira le catécholborane.

On utilisera au moins 1, et avantageusement au moins 1,1, équivalent molaire de borane par rapport à l'acide carboxylique, c'est-à-dire que l'on utilisera au moins 1 mole de borane pour 1 mole d'acide carboxylique.
Si nécessaire, on utilisera environ 1,1 + n équivalents molaires de borane, où n représente le nombre de groupements basiques et/ou protiques tels que des groupements acides (autres que l'acide carboxylique) et des groupements comportant des hétéroatomes donneurs (notamment O et N) portés par l'acide carboxylique de départ.

Un alcool suffisamment volatil pour pouvoir être éliminé par simple évaporation est utilisé, à savoir un alcool aliphatique en C₁ à C₄, et de préférence on choisira le méthanol.

Dans un mode de réalisation particulier, le procédé de l'invention sera réalisé à température ambiante, évitant ainsi des coûts supplémentaires pour chauffer ou refroidir le milieu réactionnel.

De préférence, le procédé de l'invention sera réalisé sous atmosphère inerte, notamment sous argon ou sous azote.

Avantageusement, les différentes étapes du procédé de l'invention seront réalisées successivement dans un même réacteur, sans isoler les intermédiaires de synthèse (un tel procédé est couramment qualifié de « one-pot »).

Le procédé de l'invention présente également l'intérêt que le dérivé d'acide hydroxy-bisphosphonique est insoluble dans l'alcool utilisé pour le traitement final et dans le solvant de réaction, choisi notamment parmi le tétrahydrofurane, l'acétonitrile et le nitrométhane. Ceci permet alors de faciliter l'étape de purification du dérivé d'acide hydroxy-bisphosphonique souhaité.

Ainsi, lorsqu'il est solide, le dérivé d'acide hydroxy-bisphosphonique pourra être obtenu par simple filtration du mélange réactionnel.

De plus, ce procédé pourra éventuellement être complété par une étape supplémentaire de transformation du dérivé d'acide hydroxy-bisphosphonique de l'invention en dérivé d'hydroxy-bisphosphonate par formation d'un sel tel qu'un sel de sodium, de potassium ou d'ammonium, et de préférence par formation d'un sel de sodium ou de potassium, et encore de préférence, par formation d'un sel de sodium.

La formation du sel pourra notamment être obtenue par réaction du dérivé d'acide hydroxy-bisphosphonique avec de l'hydroxyde de sodium ou de potassium, ou avec de l'ammoniac.

Les exemples qui suivent permettront de mieux comprendre l'objet de la présente invention sans pour autant en limiter sa portée.

### EXEMPLES:

Plusieurs composés de type acide hydroxy-bisphosphonique ont été réalisés par le procédé de l'invention, selon le schéma décrit ci-dessous, en utilisant le catécholborane comme borane, le méthanol comme alcool et le THF comme solvant de réaction :

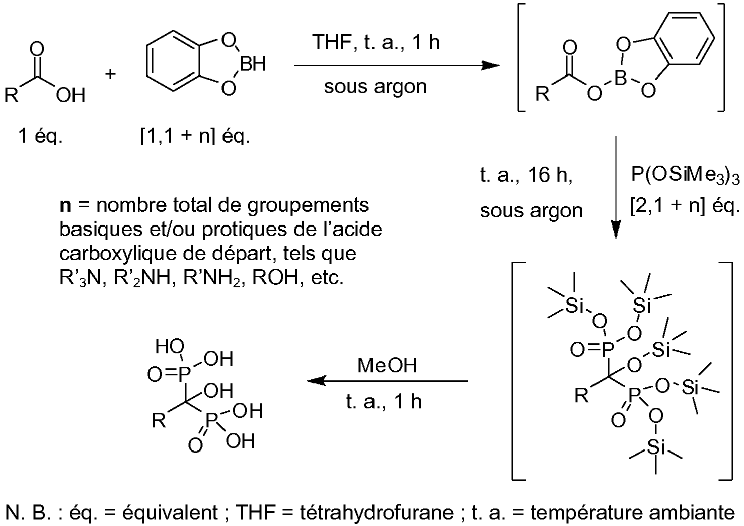

Les exemples suivants servent à illustrer le procédé de l'invention et en aucun cas à le limiter à ces seuls exemples.

### Liste des abréviations :

RMN : Résonance magnétique nucléaire
HRMS : Spectre de masse haute résolution

### EXEMPLE 1 : acide 1,2-dihydroxy-2-phényléthane-1,1-diyldiphosphonique

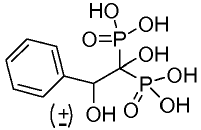

Une solution de catécholborane (1M dans le THF, 1,38 ml, 1,38 mmol, 2,1 éq.) est ajoutée sur de l'acide mandélique (utilisé comme acide carboxylique de départ) en poudre (100 mg, 0,66 mmol, 1 éq.) sous argon à température ambiante. Le mélange est agité pendant 1 h à la même température jusqu'à la fin du dégagement gazeux (H₂). Puis, P(OSiMe₃)₃ (609 mg, 2,04 mmol, 3,.1 éq.) est additionné pur et l'agitation est maintenue pendant 16 h. Du méthanol (2 ml) est ajouté et le mélange réactionnel est agité pendant 1 h, évaporé à sec sous vide, dissout dans un minimum de méthanol et dilué avec de l'éther diéthylique (30 ml). Un précipité blanc se forme. Celui-ci est séparé, rincé rapidement avec de l'éther diéthylique et séché sous argon. 135 mg (69%) d'une poudre blanche très hygroscopique sont ainsi obtenus.
RMN ¹H (D₂O, 300 MHz) **δ**, ppm: 7,60-7,50 (2H, m); 7,40-7,30 (3H, m); 5,22 (1H, dd, ³*J_{H-P}* = 12 Hz, *³J_{H-p'} =* 6 Hz).
RMN ¹³C (CD₃OD, 300 MHz) **δ**, ppm: 141,32; 130,25; 128,64; 128,40; 77,83 (t, ¹*J_{C-P}* = 135 Hz); 76,21.
RMN ³¹P (D₂O, 300 MHz) **δ**, ppm: 20 (1P, d, ²*J_{P-P'}* = 25 Hz); 19 (1P, d, ²*J_{P-P'}* = 25 Hz).

### EXEMPLE 2 : 1 acide 1-hydroxy-2-phényléthane-1,1-diyldiphosphonique

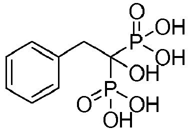

Le même protocole que dans l'exemple 1 est appliqué en utilisant toutefois 1,1 éq. de catécholborane et 2,1 éq. de P (OSiMe₃)₃. Le composé est isolé sous forme d'une huile avec un rendement de 70%.
RMN ¹H (CD₃COCD₃, 300 MHz) **δ**, ppm: 7,50-7,28 (2H, m); 7,25-7,03 (3H, m); 3,31 (2H, t, *³J_{H-P}* = 12 Hz).
RMN ¹³C (CD₃COCD₃, 300 MHz) **δ**, ppm: 136,53 (t, ³*J_{C-P}* = 8 Hz); 132,19; 128,09; 126,94; 74,47 (t, ¹*J_{C-P}* = 144 Hz); 39,08. RMN ³¹P (CD₃COCD₃, 300 MHz) **δ**, ppm: 20.

### EXEMPLE 3 : acide 2-(benzyloxycarbonylamino)-1-hydroxyéthane-1,1-diyldiphosphonique

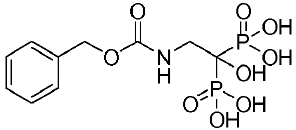

Le même protocole que dans l'exemple 1 est appliqué en utilisant toutefois 2,1 éq. de catécholborane et 3,1 éq. de P (OSiMe₃)₃. Le composé est isolé sous forme d'une huile incolore avec un rendement de 75%.
RMN ¹H (DMSO-d₆, 300 MHz) **δ**, ppm: 7,42-7,25 (5H, m); 5,01 (2H, s); 3,55 (2H, t, ³*J_{H-P}* = 12 Hz).
RMN ¹³C (DMSO-d₆, 300 MHz) **δ**, ppm: 156,15; 137,11; 128,40; 127,80; 127,76; 71,32 (t, ¹*J_{C-P}* = 143 Hz); 65,48; 44,09.
RMN ³¹P (DMSO-d₆, 300 MHz) **δ**, ppm: 17.

### EXEMPLE 4 : acide 1-hydroxyhept-6-ène-1,1-diyldiphosphonique

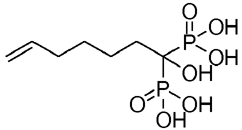

Le même protocole que dans l'exemple 1 est appliqué en utilisant toutefois 2,1 éq. de P (OSiMe₃)₃. Le composé est isolé sous forme d'une huile incolore avec un rendement de 72%.
RMN ¹H (DMSO-d₆, 300 MHz) **δ**, ppm: 5,81 (1H, m); 5,10-4,80 (2H, m); 1,99 (2H, m); 1,78 (2H, m); 1,56 (2H, m); 1,28 (2H, m).
RMN ¹³C (DMSO-d₆, 300 MHz) **δ**, ppm: 139,01; 114,50; 72,40 (t, ¹*J_{C-P}* = 138 Hz); 33,62; 33,38; 29,61; 22,97.
RMN ³¹P (DMSO-d₆, 300 MHz) **δ**, ppm: 20.

### EXEMPLE 5 : acide 1-hydroxy-3-(méthyl(3-phénoxypropyl)amino) propane-1,1-diyldiphosphonique

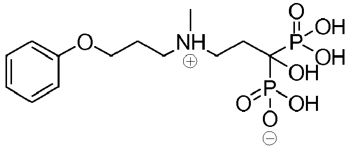

Le même protocole que dans l'exemple 1 est appliqué en utilisant toutefois 2,1 éq. de catécholborane et 3,1 éq. de P (OSiMe₃)₃. Le composé est isolé sous forme d'une poudre blanche avec un rendement de 85%.
RMN ¹H (DMSO-d₆, 300 MHz) **δ**, ppm: 7,30-7,15 (2H, m); 7,23 (2H, t, J = 7 Hz); 6,97-6,80 (3H, m) ; 3,99 (2H, t, J = 6 Hz); 3,55-3,00 (4H, m); 2,74 (3H, s); 2,35-1,95 (4H, m).
RMN ¹³C (CD₃COCD₃, 300 MHz) **δ**, ppm: 158,87; 130,16; 121,64; 115,18; 72,33 (t, ¹*J_{C-P}* = 136 Hz); 65,51; 54,31; 53,37; 40,37; 28,28; 24,44.
RMN ³¹P (DMSO-d₆, 300 MHz) **δ**, ppm: 19.

### EXEMPLE 6 : acide 1-hydroxy-3-((3-(3-(hydroxyméthyl)phénoxy) propyl)(méthyl)amino)propane-1,1-diyldiphosphonique

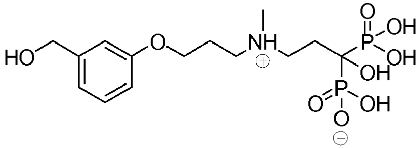

Un protocole identique à celui de l'exemple 1 est appliqué en utilisant toutefois 3,1 éq. de catécholborane et 4,1 éq. de P (OSiMe3) 3. Le chlorhydrate de l'amino acide de départ a été préalablement dissout dans du nitrométhane (200 mg dans 1 ml). Le composé est isolé sous forme d'une poudre blanche très hygroscopique avec un rendement de 78%.
RMN ¹H (D₂O-NaOD, 300 MHz) **δ**, ppm: 7,25 (1H, t, *J_{H-P}* = 7 Hz); 7,05-6,73 (3H, m); 4,49 (2H, br s); 4,01 (2H, br t); 2,85-2,33 (4H, m); 2,13 (3H, br s); 2,10-1,70 (4H, m).
RMN ¹³C (D₂O-NaOD, 300 MHz) **δ**, ppm: 158,31; 142,35; 130,02; 120,18; 114,14; 113,70; 75,59 (t, ¹*J_{C-P}* = 134 Hz); 67,06; 63,67; 53,28; 52,82; 40,51; 32,12; 25,73.
RMN ³¹P (D₂O-NaOD, 300 MHz) **δ**, ppm: 19.

### EXEMPLE 7 : acide 1-hydroxy-3-méthylbut-2-ène-1,1-diyldiphosphonique

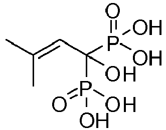

Le même protocole que dans l'exemple 1 est appliqué en utilisant toutefois 1,1 éq. de catécholborane et 2,1 éq. de P (OSiMe₃)₃. Le composé est isolé, comme décrit dans l'exemple 1, par la précipitation de la solution dans l'acétone avec Et₂O, sous forme d'une huile incolore avec un rendement de 60%.
RMN ¹H (MeOD, 300 MHz) δ, ppm: 5,55 (1H, t, *³J_{H-P}* = 6,9 Hz); 1,98 (3H, t, ⁵*J_{H-P}* = 3, 4 Hz); 1,80 (3H, t, ⁵*J_{H-P}* = 3, 4 Hz).
RMN ¹³C (MeOD, 300 MHz) δ, ppm: 140,28 (t, *³J_{C-P}* = 12 Hz); 118, 39 (t, *²J_{C-P}* = 5 Hz); 77,17 (t, ¹*J_{C-P}* = 147 Hz); 28,52; 20,06.
RMN ³¹P (MeOD, 300 MHz) δ, ppm: 19.

### EXEMPLE 8 : acide 1-hydroxy-4-(1H-indol-3-yl)butane-1,1-diyldiphosphonique

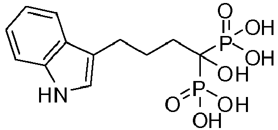

Le même protocole que dans l'exemple 1 est appliqué en utilisant toutefois 2,1 éq. de catécholborane et 3,1 éq. de P(OSiMe₃)₃. Le composé est isolé sous forme d'une poudre blanche très hygroscopique avec un rendement de 65%.
RMN ¹H (MeOD-D₂O, 300 MHz) δ, ppm: 7,58 (1H, d, *J **=*** 7 Hz); 7,35 (1H, d, *J =* 7 Hz); 7,17-6,93 (3H, m); 2,70 (2H, t, *J* = 6 Hz); 2,05-1,50 (4H, m).
RMN ¹³C (MeOD-D₂O, 300 MHz) δ, ppm: 137,60; 128,45; 123,40; 122,49; 119, 72 (2C); 116, 12; 112, 48; 74,59 (t, ¹*J_{C-P}* = 143 Hz); 34, 87; 26,37; 25,44.
RMN ³¹P (MeOD-D₂O, 300 MHz) δ, ppm: 19.

### EXEMPLE 9 : acide 2-(adamant-1-yl)-1-hydroxyéthane-1,1-diyldiphosphonique

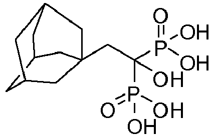

Le même protocole que dans l'exemple 1 est appliqué en utilisant toutefois 1,1 éq. de catécholborane et 2,1 éq. de P(OSiMe₃)₃. Le composé est isolé, comme décrit dans l'exemple 1 en utilisant cette fois un système CH₂Cl₂/Et₂O, sous forme d'une huile incolore avec un rendement de 62%.
RMN ¹H (MeOD-CDCl₃, 300 MHz) δ, ppm: 1,92 (2H, t, *³J_{H-P}* = 15 Hz); 1,89 (3H, br s); 1,82 (6H, br s); 1,65 (6H, br s).
RMN ¹³C (MeOD-CDCl₃, 300 MHz) δ, ppm: 75,17 (t, ¹*J_{C-P}* = 139 Hz); 45,62; 44,00; 37,83; 35,25 (t, ³*J_{C-P}* = 10 Hz); 29,98.
RMN ³¹P (MeOD-CDCl₃, 300 MHz) δ, ppm: 20.

### EXEMPLE 10 : acide 2-(diméthylamino)-1-hydroxyéthane-1,1-diyldiphosphonique

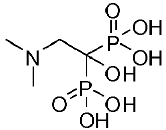

Le même protocole que dans l'exemple 1 est appliqué en utilisant toutefois 2,1 éq. de catécholborane et 3,1 éq. de P(OSiMe₃)₃. Le composé est isolé sous forme d'une poudre blanche très hygroscopique avec un rendement de 50%.
RMN ¹H (MeOD-D₂O, 300 MHz) δ, ppm: 2,89 (2H, t, ³*J_{H-P}* = 12 Hz); 2,28 (6H, s).
RMN ¹³C (MeOD-D₂O, 300 MHz) δ, ppm: 71,36 (t, ¹*J_{C-P}* = 136 Hz); 61,07; 46,19.
RMN ³¹P (MeOD-D₂O, 300 MHz) δ, ppm: 13.

### EXEMPLE 11 : acide 3-(5-(diméthylamino)-N-méthylnaphthalène-1-sulfonamido)-1-hydroxypropane-1,1-diyldiphosphonique (dérivé fluorescent)

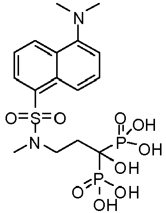

Le même protocole que dans l'exemple 1 est appliqué, en utilisant toutefois 3,1 éq. de catécholborane et 4,1 éq. de P(OSiMe₃)₃. On isole une poudre blanche fluorescente hygroscopique comme décrit dans l'exemple 1 avec un rendement de 86%.
RMN ¹H (D₂O-NaOD, 300 MHz) δ, ppm: 8.37 (1H, d, *J =* 6 Hz), 8.17 (1H, d, *J =* 6 Hz), 8.05 (1H, d, *J =* 6 Hz), 7.67-7.50 (2H, m), 7.30 (1H, d, *J =* 6 Hz), 3.62 (2H, m), 2.79 (3H, s), 2.74 (6H, s), 2.19 (2H, m).
RMN ¹³C (D₂O-NaOD, 300 MHz) δ, ppm: 149.31, 132.09, 128.71, 128.17, 127.98, 127.83, 127.49, 122.88, 118.41, 114.77, 74.14 (t, ¹*J_{C-P}* = 134 Hz), 45.96 (t, *J_{C-P}* = 7 Hz), 43.68 (2C), 33.36, 32.97.
RMN ³¹P (D₂O-NaOD, 300 MHz) δ, ppm: 18.
HRMS (ES) (m/z) : [M-H]⁻ calculé pour C₁₆H₂₄N₂O₉P₂S 481.0600, trouvé 481.0600.

### EXEMPLE 12 : 3-(2-hydroxy-2,2-diphosphonoéthoxy)-17β-hydroxyestra-1,3,5(10)-triène (dérivé de l'oestradiol)

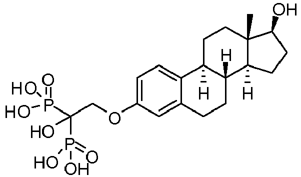

Le même protocole que dans l'exemple 1 est appliqué, en utilisant toutefois 2,1 éq. de catécholborane et 3,1 éq. de P(OSiMe₃)₃. On isole une poudre blanche hygroscopique comme décrit dans l'exemple 1 avec un rendement de 78%.
RMN ¹H (D₂O, 300 MHz) δ, ppm: 7.27 (1H, d, *J =* 8 Hz), 6.90-6.75 (2H, m), 4.33 (2H, t, ³*J_{H-P}* = 9 Hz), 3.66 (1H, t, ³*J* = 9 Hz), 2.78 (2H, m), 2.25 (1H, m), 2.11 (1H, m), 1.98 (1H, m), 1.90-1.75 (2H, m), 1.65 (1H, m), 1.50-1.06 (7H, m), 0.68 (3H, s).
RMN ¹³C (D₂O, 300 MHz) δ, ppm: 156.66, 138.73, 133.48, 126.59, 114.97, 112.75, 81.46, 73.99 (t, ³*J_{C-P}* = 132 Hz), 70.49, 49.21, 43.32, 42.71, 38.43, 36.17, 29.10, 28.87, 26.60, 25.88, 22.49, 10.62.
RMN ³¹P (D₂O, 300 MHz) δ, ppm: 16.
HRMS (ES) (m/z): [M-H]⁻ calculé pour C₂₀H₃₀O₉P₂ 475.1287, trouvé 475.1281.

### EXEMPLE 13 : acide 2-(1-(4-chlorobenzoyl)-5-méthoxy-2-méthyl-1H-indol-3-yl)-1-hydroxyéthane-1,1-diyldiphosphonique (dérivé de l'indométacine)

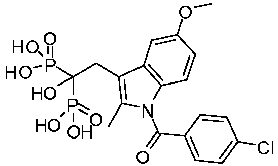

Le même protocole que dans l'exemple 1 est appliqué, en utilisant toutefois 2,1 éq. de catécholborane et 3,1 éq. de P(OSiMe₃)₃. On isole une huile claire jaune comme décrit dans l'exemple 1 avec un rendement de 36%.
RMN ¹H (D₂O, 300 MHz) δ, ppm: 7.75 (2H, d, *J =* 8 Hz), 7.47 (1H, br s), 7.39 (2H, d, *J* = 8 Hz), 7.20 (1H, d, *J =* 9 Hz), 6.71 (1H, dd, *J =* 3 Hz, *J* = 9 Hz), 3.83 (3H, s), 3.38 (2H, t, ³*J_{H-P}* = 12 Hz), 2.41 (3H, s).
RMN ¹³C DEPT-135 (D₂O, 300 MHz) δ, ppm: 130.29, 128.18, 110.84, 109.08, 103.61, 56.33, 29.01, 12.09.
RMN ³¹P (D₂O, 300 MHz) δ, ppm: 19.
HRMS (ES) (m/z) : [M+Na]⁺ calculé pour C₁₉H₂₀ClNO₉P₂ 526.0200, trouvé 526.0201.

### EXEMPLE 14 : acide 1-hydroxy-2-(4-isobutylphényl)propane-1,1-diyldiphosphonique (dérivé de l'ibuprofène)

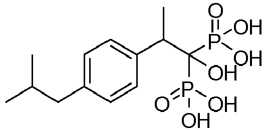

Le même protocole que dans l'exemple 1 est appliqué, en utilisant toutefois 1,1 éq. de catécholborane et 2,1 éq. de P(OSiMe₃)₃. On isole une huile sans couleur comme décrit dans l'exemple 1 avec un rendement de 62%.
RMN ¹H (D₂O, 300 MHz) δ, ppm: 7.19 (2H, d, J = 7 Hz), 6.85 (2H, d, *J =* 7 Hz), 3.39, (1H, m), 2.13 (2H, br s), 1.54 (1H, m), 1.41 (3H, d, *J =* 7 Hz), 0.57 (6H, d, *J =* 8 Hz).
RMN ¹³C (D₂O, 300 MHz) δ, ppm: 140.02, 138.25 (t, *³J_{C-P}* = 9 Hz), 129.76, 128.33, 76.53 (t, *¹J_{C-P}* = 142 Hz), 44.52, 43.27, 29.72, 21.89 (2C), 17.09.
RMN ³¹P (D₂O, 300 MHz) δ, ppm: 19.77 (1P, d, *²J_{P-P}* = 33 Hz), 18.64 (1P, d, *²J_{P-P}* = 33 Hz).
HRMS (ES) (m/z): [M-H]⁻ calculé pour C₁₃H₂₂O₇P₂ 351.0763, trouvé 351.0762.

### EXEMPLE 15 : acide 2-amino-1-hydroxyéthane-1,1-diyldiphosphonique (dérivé de Glycine)

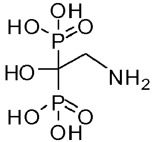

Le même protocole que dans l'exemple 1 est appliqué, en utilisant toutefois 3,1 éq. de catécholborane et 4,1 éq. de P(OSiMe₃)₃. On isole une poudre blanche très hygroscopique comme décrit dans l'exemple 1 avec un rendement de 80%.
RMN ¹H (D₂O, 300 MHz) δ, ppm: 2.84 (2H, t, *³J_{H-P}* = 12 Hz).
RMN ¹³C (D₂O, 300 MHz) δ, ppm: 75.95 (t, ¹*J_{C-P}* = 133 Hz), 46.02.
RMN ³¹P (D₂O, 300 MHz) δ, ppm: 18.

### EXEMPLE 16 : acide 4-amino-1-hydroxybutane-1,1-diyldiphosphonique (alendronate)

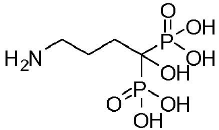

Le même protocole que dans l'exemple 1 est appliqué, en utilisant toutefois 3,1 éq. de catécholborane et 4,1 éq. de P(OSiMe₃)₃. On isole une poudre blanche très hygroscopique comme décrit dans l'exemple 1 avec un rendement de 51%.
RMN ¹H (D₂O, 300 MHz) δ, ppm: 3.03 (2H, m), 2.20-1.70 (4H, m).
RMN ¹³C (D₂O, 300 MHz) δ, ppm: 73.09 (t, ¹*J_{C-P}* = 139 Hz), 39.85, 30.48, 21.96.
RMN ³¹P (D₂O, 300 MHz) δ, ppm: 18.

### EXEMPLE 17 : acide 1-hydroxy-3-(méthylamino)propane-1,1-diyldiphosphonique (analogue N-méthylé du néridronate)

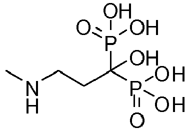

Le même protocole que dans l'exemple 1 est appliqué, en utilisant toutefois 2,1 éq. de catécholborane et 3,1 éq. de P(OSiMe₃)₃. On isole une poudre blanche très hygroscopique comme décrit dans l'exemple 1 avec un rendement de 73%.
RMN ¹H (D₂O, 300 MHz) δ, ppm: 3.35 (2H, t, ³*J* = 7 Hz), 2.69 (3H, br s), 2.31 (2H, sept, ³*J* = 7 Hz).
RMN ¹³C (D₂O, 300 MHz) δ, ppm: 70.33 (t, ¹*J_{C-P}* = 141 Hz), 43.78 (t, *J_{C-P}* = 7 Hz), 31.07, 27.56.
RMN ³¹P (D₂O, 300 MHz) δ, ppm: 18.

## Revendications

1. Procédé de préparation d'un dérivé d'acide hydroxy-bisphosphonique ou d'un sel de celui-ci à partir de l'acide carboxylique correspondant comprenant les étapes successives suivantes :
- activation de la fonction acide carboxylique sous la forme de son dérivé boronate par action d'un borane, puis
- réaction dans les conditions d'Arbuzov avec le tris(triméthylsilyl) phosphite,
- traitement avec un alcool, et
- séparation du dérivé d'acide hydroxy-bisphosphonique formé, du milieu réactionnel,
dans lequel :
le borane est choisi parmi le pinacolborane et le catécholborane ;
l'alcool est choisi parmi les alcools aliphatiques en C₁ à C₄ ; et
le dérivé d'acide hydroxy-bisphosphonique répond à la formule (I) suivante : 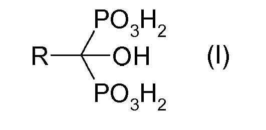 dans laquelle R désigne un groupement C₁₋₁₀alkyle, C₂₋₁₀alkényle, C₃₋₁₅cycloalkyle, aryle, C₃₋₁₅cycloalkyl-C₁₋₁₀alkyle, C₃₋₁₅cycloalkyl-C₂₋₁₀alkényle, C₃₋₁₅cycloalkyl-aryle, aryl-C₁₋₁₀alkyle, aryl-C₂₋₁₀alkényle, aryl-C₃₋₁₅cycloalkyle ou polycyclique hydrocarboné saturé ou insaturé en C₅₋₂₀,
ledit groupement étant éventuellement substitué par un groupement C₁₋₁₀alkyl-X-, C₂₋₁₀alkényl-X-, C₃₋₁₅cycloalkyl-X-, aryl-X-, C₃₋₁₅cycloalkyl-C₁₋₁₀alkyl-X-, C₃₋₁₅cycloalkyl-C₂₋₁₀alkényl-X-, C₃₋₁₅cycloalkyl-aryl-X-, aryl-C₁₋₁₀alkyl-X-, aryl-C₂₋₁₀alkényl-X-, aryl-C₃₋₁₅cycloalkyl-X-, (polycycle hydrocarboné saturé ou insaturé en C₅₋₂₀)-X-, aryl-X'-C₁₋₁₀alkyl-X-, aryl-X'-C₂-₁₀alkényl-X-, aryl-X'-C₃₋₁₅cycloalkyl-X-, aryl-C₁₋₁₀alkyl-X'-C₁₋₁₀alkyl-X-, aryl-C₁₋₁₀alkyl-X'-C₂₋₁₀alkényl-X- ou aryl-C₁₋₁₀alkyl-X'-C₃₋₁₅cycloalkyl-X-,
l'ensemble étant éventuellement substitué par un ou plusieurs groupement(s) choisi(s) parmi OR', NR'R", SR', C₁₋₁₀alkyle et un atome d'halogène ;
avec :
- X et X' désignant, indépendamment l'un de l'autre, un groupement, -O-, -NR'-, -S-, -CO-, -OC(O)-, - CO₂-, -SO₂-, -SO-, -SO₂-NR'-, -NR'-SO₂-, -NR'C(O)-, -C(O)NR'-, -OC(O)NR'- ou -NR'C(O)O-, et
- R' et R" désignant, indépendamment l'un de l'autre, un atome d'hydrogène ou un groupement C₁₋₁₀alkyle, C₂₋₁₀alkényle, C₃₋₁₅cycloalkyle ou aryle.

2. Procédé selon la revendication 1, **caractérisé en ce qu'**il peut être réalisé à partir d'un acide carboxylique comportant des fonctions sensibles au milieu acide, telles qu'un groupement tertio-butyloxycarbonyle, silyloxy, carboxylate ou phosphate de benzyle, et/ou des fonctions amines et/ou alcools libres.

3. Procédé selon l'une des revendications 1 et 2, **caractérisé en ce que** le borane est le catécholborane.

4. Procédé selon l'une des revendications 1 à 3, **caractérisé en ce que** l'alcool est le méthanol.

5. Procédé selon l'une des revendications 1 à 4, **caractérisé en ce qu'**il est réalisé à température ambiante.

6. Procédé selon l'une des revendications 1 à 5, **caractérisé en ce qu'**il est réalisé sous atmosphère inerte.

7. Procédé selon la revendication 6, **caractérisé en ce que** l'atmosphère inerte est de l'argon ou de l'azote.

8. Procédé selon l'une des revendications 1 à 7, **caractérisé en ce que** les différentes étapes sont réalisées successivement dans un même réacteur, sans isoler les intermédiaires de synthèse.

9. Procédé selon l'une des revendications 1 à 8, **caractérisé en ce que** le dérivé d'acide hydroxy-bisphosphonique obtenu est insoluble dans l'alcool et dans le solvant de réaction.

10. Procédé selon la revendication 9, **caractérisé en ce que** le solvant de réaction est choisi parmi le tétrahydrofurane, l'acétonitrile et le nitrométhane.

11. Procédé selon l'une des revendications 1 à 10, **caractérisé en ce que** la séparation du dérivé d'acide hydroxy-bisphosphonique du milieu réactionnel consiste en une filtration, lorsque le dérivé d'acide hydroxy-bisphosphonique est sous forme solide.

12. Procédé selon l'une des revendications 1 à 11, **caractérisé en ce qu'**il comprend une étape supplémentaire de transformation du dérivé d'acide hydroxy-bisphosphonique en dérivé d'hydroxy-bisphosphonate par formation d'un sel tel qu'un sel de sodium, de potassium ou d'ammonium, et de préférence, par formation d'un sel de sodium.

13. Procédé selon la revendication 12, **caractérisé en ce que** le sel est un sel de sodium, de potassium ou d'ammonium.

14. Procédé selon la revendication 13, **caractérisé en ce que** le sel est un sel de sodium.

## Patentansprüche

1. Verfahren zur Herstellung eines Hydroxybisphosphonsäure-Derivats oder eines Salzes davon aus einer entsprechenden Carbonsäure, wobei das Verfahren die folgenden sukzessiven Schritte umfasst:
- Aktivieren der Carbonsäurefunktion in der Form ihres Boronat-Derivats durch Einwirken eines Borans, dann
- Umsetzen unter Arbuzov-Bedingungen mit Tris(trimethylsilyl)phosphit,
- Behandeln mit einem Alkohol und
- Trennen des gebildeten Hydroxybisphosphonsäure-Derivats von dem Reaktionsmedium,
wobei:
das Boran aus Pinacolboran und Catecholboran ausgewählt ist;
der Alkohol aus aliphatischen C₁- bis C₄-Alkoholen ausgewählt ist und
das Hydroxybisphosphonsäure-Derivat der folgenden Formel (I) entspricht: 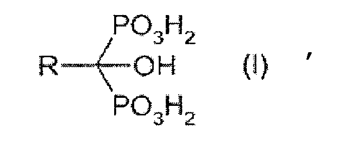 wobei R für eine C₁₋₁₀-Alkyl-, C₂₋₁₀-Alkenyl-, C_{3-1.5}-Cycloalkyl-, Aryl-, C₃₋₁₅-Cycloalkyl-C₁₋₁₀-alkyl-, C₃₋₁₅-Cycloalkyl-C₂₋₁₀-alkenyl-, C₃₋₁₅-Cycloalkyl-aryl-, Aryl-C₁₋₁₀-alkyl-, Aryl-C₂₋₁₀-alkenyl-, Aryl-C₃₋₁₅-cycloalkyl-oder gesättigte oder ungesättigte polycyclische C₅₋₂₀-Kohlenwasserstoffgruppe steht,
wobei die Gruppe gegebenenfalls durch eine C₁-₁₀-Alkyl-X-, C₂₋₁₀-Alkenyl-X-, C₃₋₁₅-Cycloalkyl-X-, Aryl-X-, C₃₋₁₅-Cycloalkyl-C₁₋₁₀-alkyl-X-, C₃₋₁₅-Cycloalkyl-C₂₋₁₀-alkenyl-X-, C₃₋₁₅-Cycloalkyl-aryl-X-, Aryl-C₁₋₁₀-alkyl-X-, Aryl-C₂₋₁₀-alkenyl-X-, Aryl-C₃₋₁₅-cycloalkyl-X-, (gesättigte oder ungesättigte polycyclische C₅₋₂₀-Kohlenwasserstoff) -X-, Aryl-X'-C₁₋₁₀-alkyl-X-, Aryl-X'-C₂₋₁₀-alkenyl-X-, Aryl-X'-C₃₋₁₅-cycloalkyl-X-, Aryl-C₁₋₁₀-alkyl-X' -C₁₋₁₀-alkyl-X-, Aryl-C₁₋₁₀-alkyl-X'-C₂₋₁₀-alkenyl-X- oder Aryl-C₁₋₁₀-alkyl-X'-C₃₋₁₅-cycloalkyl-X-Gruppe substituiert ist,
wobei das Ganze gegebenenfalls durch eine oder mehrere Gruppen substituiert ist, die aus OR', NR'R" , SR', C₁₋₁₀-Alkyl und einem Halogenatom ausgewählt ist bzw. sind;
wobei:
- X und X' unabhängig voneinander für eine Gruppe, -O-, -NR'-, -S-, -CO-, -OC(O)-, -CO₂-, -SO₂-, -SO-, -SO₂-NR'-, -NR'-SO₂-, -NR'C(O)-, -C(O)NR'-, - OC(O)NR'- oder -NR'C(O)O- stehen und
- R' und R" unabhängig voneinander für ein Wasserstoffatom oder eine C₁₋₁₀-Alkyl-, C₂₋₁₀-Alkenyl-, C₃₋₁₅-Cycloalkyl- oder Arylgruppe stehen.

2. Verfahren nach Anspruch 1, **dadurch gekennzeichnet, dass** es ausgehend von einer Carbonsäure durchgeführt werden kann, die empfindliche Funktionen in einem sauren Medium, wie eine *tert*.-Butyloxycarbonylgruppe, Silyloxy, Carboxylat oder Benzylphosphat, und/oder freie Aminfunktionen und/oder Alkohole umfasst.

3. Verfahren nach einem der Ansprüche 1 und 2, **dadurch gekennzeichnet, dass** es sich bei dem Boran um Catecholboran handelt.

4. Verfahren nach einem der Ansprüche 1 bis 3, **dadurch gekennzeichnet, dass** es sich bei dem Alkohol um Methanol handelt.

5. Verfahren nach einem der Ansprüche 1 bis 4, **dadurch gekennzeichnet, dass** es bei Umgebungstemperatur durchgeführt wird.

6. Verfahren nach einem der Ansprüche 1 bis 5, **dadurch gekennzeichnet, dass** es unter einer inerten Atmosphäre durchgeführt wird.

7. Verfahren nach Anspruch 6, **dadurch gekennzeichnet, dass** es sich bei der inerten Atmosphäre um Argon oder Stickstoff handelt.

8. Verfahren nach einem der Ansprüche 1 bis 7, **dadurch gekennzeichnet, dass** die verschiedenen Schritte sukzessiv in demselben Reaktor durchgeführt werden, ohne dass die Synthesezwischenprodukte isoliert werden.

9. Verfahren nach einem der Ansprüche 1 bis 8, **dadurch gekennzeichnet, dass** das erhaltene Hydroxybisphosphonsäure-Derivat in dem Alkohol und in dem Reaktionslösungsmittel unlöslich ist.

10. Verfahren nach Anspruch 9, **dadurch gekennzeichnet, dass** das Reaktionslösungsmittel aus Tetrahydrofuran, Acetonitril und Nitromethan ausgewählt ist.

11. Verfahren nach einem der Ansprüche 1 bis 10, **dadurch gekennzeichnet, dass** das Trennen des Hydroxy-bisphosphonsäure-Derivats von dem Reaktionsmedium in einer Filtration besteht, wenn das Hydroxy-bisphosphonsäure-Derivat in fester Form ist.

12. Verfahren nach einem der Ansprüche 1 bis 11, **dadurch gekennzeichnet, dass** es einen zusätzlichen Schritt des Umwandelns des Hydroxybisphosphonsäure-Derivats in ein Hydroxybisphosphonat-Derivat durch Bilden eines Salzes, wie einem Natrium-, Kalium- oder Ammoniumsalz, und vorzugsweise durch Bilden eines Natriumsalzes umfasst.

13. Verfahren nach Anspruch 12, **dadurch gekennzeichnet, dass** es sich bei dem Salz um ein Natrium-, Kalium- oder Ammoniumsalz handelt.

14. Verfahren nach Anspruch 13, **dadurch gekennzeichnet, dass** es sich bei dem Salz um ein Natriumsalz handelt.

## Claims

1. Method for preparing a hydroxy-bisphosphonic acid or a salt thereof from the corresponding carboxylic acid comprising the following successive steps:
- activation of the carboxylic acid function in the form of its boronate derivative by action of a borane, then
- reaction under Arbuzov conditions with tris(trimethylsilyl) phosphite,
- treatment with an alcohol, and
- separation of the hydroxy-bisphosphonic acid derivative formed, from the reaction medium,
wherein:
the borane is chosen from pinacolborane and catecholborane;
the alcohol is chosen from C₁ to C₄ aliphatic alcohols; and
the hydroxy-bisphosphonic acid derivative has the following formula (I): 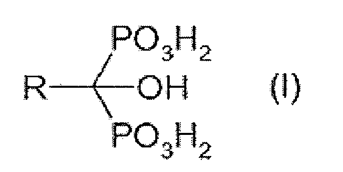 wherein R designates a C₁₋₁₀alkyl, C₂₋₁₀alkenyl, C₃₋₁₅cyclocalkyl, aryl, C₃₋₁₅cyclocalkyl-C₁₋₁₀alkyl, C₃₋₁₅cycloalkyl-C₂₋₁₀alkenyl, C₃₋₁₅cycloalkyl-aryl, aryl-C₁₋₁₀alkyl, aryl-C₂₋₁₀alkenyl, aryl-C₃₋₁₅cycloalkyl or saturated or unsaturated C₅₋₂₀ polycyclic hydrocarbon,
said group being optionally substituted by a C₁₋₁₀alkyl-X-, C₂₋₁₀alkenyl-X-, C₃₁₅cyclocalkyl-X-, aryl-X-, C₃₋₁₅cyclocalkyl-C₁₋₁₀alkyl-X-, C₃₋₁₅cycloalkyl-C₂₋₁₀alkenyl-X-, C₃₋₁₅cycloalkyl-aryl-X-, aryl-C₁₋₁₀alkyl-X-, aryl-C₂₋₁₀alkenyl-X-, aryl-C₃₋₁₅cycloalkyl-X-, (saturated or unsaturated C₅₋₂₀ polycyclic hydrocarbon)-X-, aryl-X'-C₁₋₁₀alkyl-X-, aryl-X'-C₂₋₁₀alkenyl-X-, aryl-X'-C₃₋₁₅cyclocalkyl-X-, aryl-C₁₋₁₀alkyl-X'-C₁₋₁₀alkyl-X-, aryl-C₁₋₁₀alkyl-X'-C₂₋₁₀alkenyl-X-, or aryl-C₁₋₁₀alkyl-X'-C₃₋₁₅cyclocalkyl-X-,
the whole optionally being substituted by one or more group (s) chosen from OR', NR'R" SR', C₁₋₁₀alkyl and a halogen atom;
with:
- X and X' designating, independently of one another, an -O-, -NR'-, -S-, -CO-, -OC(O)-, -CO₂-, -SO₂-, -SO-, -SO₂-NR'-, -NR'-SO₂-, -NR'C(O)-, -C(O)NR'-, -OC(O)NR'- or -NR'C(O)O-group, and
- R' and R" designating, independently of one another, a hydrogen atom or a C₁₋₁₀alkyl, C₂₋₁₀alkenyl, C₃₋₁₅cycloalkyl or aryl group.

2. Method according to claim 1, **characterized in that** it can be carried out from a carboxylic acid comprising functions sensitive to the acid medium, such as a terio-butyloxycarbonyl, silyloxy, carboxylate or benzyl phosphate group, and/or free amine and/or alcohol functions.

3. Method according to one of claims 1 and 2, **characterized in that** the borane is catecholborane.

4. Method according to one of claims 1 to 3, **characterized in that** the alcohol is methanol.

5. Method according to one of claims 1 to 4, **characterized in that** it is carried out at room temperature.

6. Method according to one of claims 1 to 5, **characterized in that** it is carried out under an inert atmosphere.

7. Method according to claim 6, **characterized in that** the inert atmosphere is argon or nitrogen.

8. Method according to one of claims 1 to 7, **characterized in that** the different steps are carried out successively in the same reactor, without isolating the synthesis intermediates.

9. Method according to one of claims 1 to 8, **characterized in that** the hydroxy-bisphosphonic acid derivative obtained is insoluble in alcohol and in the reaction solvent.

10. Method according to claim 9, **characterized in that** the reaction solvent is chosen from tetrahydrofurane, acetonitrile and nitromethane.

11. Method according to one of claims 1 to 10, **characterized in that** the separation of the hydroxy-bisphosphonic acid from the reaction medium consists in a filtration, when the hydroxy-bisphosphonic acid derivative is in solid form.

12. Method according to one of claims 1 to 11, **characterized in that** it comprises an additional step of transforming the hydroxy-bisphosphonic acid derivative into a hydroxy-bisphosphonate derivative by forming a salt such as a sodium, potassium or ammonium salt, and, preferably, by forming a sodium salt.

13. Method according to claim 12, **characterized in that** the salt is a sodium, potassium or ammonium salt.

14. Method according to claim 13, **characterized in that** the salt is a sodium salt.
